(19) Europäisches Patentamt
European Patent Office
Office européen des brevets

(11) **EP 4 443 107 A1**

(12) **EUROPÄISCHE PATENTANMELDUNG**

(43) Veröffentlichungstag:
**09.10.2024 Patentblatt 2024/41**

(21) Anmeldenummer: 23217748.5

(22) Anmeldetag: **18.12.2023**

(51) Internationale Patentklassifikation (IPC):
**G01C 21/02** (2006.01) **B64G 1/36** (2006.01)

(52) Gemeinsame Patentklassifikation (CPC):
**G01C 21/025; B64G 1/361**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **27.01.2023 DE 102023102002**

(71) Anmelder: **Jena Optronik GmbH**
**07745 Jena (DE)**

(72) Erfinder:
• **Dr.-Ing. Schmidt, Uwe**
**07616 Bürgel (DE)**

• **Möller, Erik**
**07778 Tautenburg (DE)**
• **Hädrich, Bernd**
**07743 Jena (DE)**
• **Hahn, Steffen**
**07646 Stadtroda (DE)**
• **Boy, Michael**
**06636 Laucha (DE)**
• **Dr. Colditz, Sebastian**
**07749 Jena (DE)**

(74) Vertreter: **Ege Lee & Roider Patentanwälte**
**Wilhelm-Wagenfeld-Straße 24**
**80807 München (DE)**

(54) **STERNBILDSIMULATOR, SYSTEM UND VERFAHREN ZUM EINMESSEN EINES STERNSENSORS**

(57) Die vorliegende Erfindung bezieht sich auf einen kalibrierten Sternbildsimulator (1 10), ein System (100) und ein Verfahren (V) zum Einmessen und/oder Test eines auf einem Raumflugkörper (130) montierten Sternsensors (120). Der kalibrierte Sternbildsimulator (110) umfasst eine optische Vorrichtung (111) konfiguriert zum Projizieren einer definierten Sternformation (IRF) eines Sternkataloges vorzugsweise auf einen Raumflugkörper (130) montierten Sternsensor (120). Ferner umfasst der kalibrierte Sternbildsimulator (110) eine Abgleicheinheit (113) mit einer Positions- und/oder Lagereferenz (ARF) des kalibrierten Sternbildsimulators (110) konfiguriert zum Erfassen einer Position- und/oder Lage des kalibrierten Sternbildsimulators (110) im Raum, wobei die definierte Sternformation (IRF) und die Positions- und/oder Lagereferenz (ARF) in einer ersten fest kalibrierten Rotation ($Q_{OSPS}$) zueinander liegen. Der kalibrierte Sternbildsimulator (110) verbessert das Einmessen des Sternsensor (120) als eigenständiges Kalibriernormal. Der Sternbildsimulator (110) wird zu einem Kalibriernormal.

FIG. 1

EP 4 443 107 A1

**Beschreibung**

Die Erfindung betrifft einen kalibrierten Sternbildsimulator zum Einmessen und/oder Test eines auf einem Raumflugkörper montierten Sternsensors. Außerdem betrifft die Erfindung ein System zum Einmessen und/oder Test eines auf einem Raumflugkörper montierten Sternsensors. Ferner betrifft die Erfindung ein Verfahren zum Einmessen und/oder Test eines auf einem Raumflugkörper montierten Sternsensors, eine Recheneinheit und ein Computerprogramm.

Sternsensoren sind bekannt und verkörpern ein hochgenaues 3-Achsen Inertial Winkelsystem. Die Winkelmessung kann im Boresight Reference System (BRF) des Sternsensors ausgegeben werden. Sternsensoren können zur Orientierung von Raumflugkörpern eingesetzt werden. Hierzu nimmt der Sternsensor Bilder von bestimmten Bereichen der Umgebung auf und bspw. eine Recheneinheit verarbeitet diese Bilder, um die Position der Sterne im Verhältnis zum Raumflugkörper zu bestimmen. Der Raumflugkörper kann die bekannte Position der Sterne im Verhältnis zu der tatsächlich beobachteten Position vergleichen, um die Orientierung des Raumflugkörpers im Raum zu bestimmen, womit ebenfalls die Position im Weltraum genau bestimmt werden kann. Um einen Sternsensor in einem Raumflugkörper einsetzen zu können, muss dieser auf den Raumflugkörper kalibriert werden. Hierbei bedarf es zur Übertragung des Sternsensor BRF mittels einer Rotationsmatrix auf das Raumflugkörper Referenz System (Spacecraft Reference System - SCRF) eines optisch an-messbaren Referenzsystems, welches über eine Rotationsmatrix zum BRF des Sternsensors beim Hersteller des Sternsensors eingemessen bzw. kalibriert wird. Das zuvor genannte Referenzsystem wird als Alignment Reference System (ARF) bezeichnet und kann als ein am Sternsensor fest montierter Spiegelwürfel ausgebildet sein. Ein Integrator / Benutzer kann den am Sternsensor montierten Spiegelwürfel vermessen und somit die Rotation zum Raumfahrzeugreferenzsystem (SCRF) herstellen, womit das Sternsensor BRF System über die ARF/BRF Rotation im SCRF (Referenzsystem im Raumflugkörper) bekannt ist.

Dieses Verfahren weist den Nachteil auf, dass zum Zweck der Übertragung des Sternsensor BRF nach außen ein fest montierter Spiegelwürfel notwendig ist. Der fest montierte Spiegelwürfel verursacht hohe Beschaffungs- und Montagekosten und erhöht die Sensormasse selbst, welche einen Einfluss auf den Raumflugkörper haben kann. Ferner liegt ein erhöhter Aufwand für das Durchführen der Kalibrierung des Sternsensors vor, was zusätzliche Kosten bei der Kalibrierung verursacht. Weiterhin verbleibt der Spiegelwürfel am Sternsensor, wobei dieser im operationellen Betrieb selbst keine Bedeutung hat, sich aber durch das zusätzliche Gewicht nachteilig auf den Raumflugkörper auswirken kann. Zudem weist das bekannte Verfahren den Nachteil auf, dass die ARF/BRF Vermessung beim Sternsensorhersteller selbst erfolgen muss, da der Betreiber des Raumflugkörpers oder der Anwender des Sternsensors selbst keine Messtechnik zur Verfügung hat. Zudem ist die Kalibrierung zeitaufwendig und bindet zusätzliche Messtechnikressourcen. Ferner ist durch den hohen Zeitaufwand für die Vermessung, die Durchführung des Verfahrens beim Hersteller des Sternsensors nicht kompatibel zum erforderlichen Produktionsdurchsatz, insbesondere nicht bei einer Produktion von mehreren Sternsensoren pro Woche, wie es für Konstellationsprogramme notwendig ist.

Der Erfindung liegt daher die Aufgabe zugrunde, die eingangs genannten im Stand der Technik bekannten Nachteile wenigstens teilweise zu überwinden und den eingangs genannten Sternbildsimulator strukturell und/oder funktionell zu verbessern, sodass ein Anwender/Integrator den Sternsensor kalibrieren (einmessen und/oder testen) kann. Außerdem liegt der Erfindung die Aufgabe zugrunde, ein eingangs genanntes System und ein Verfahren strukturell und/oder funktionell zu verbessern.

Die Aufgabe wird gelöst mit einem kalibrierten Sternbildsimulator mit den Merkmalen des Anspruchs 1. Außerdem wird die Aufgabe gelöst mit einem System mit den Merkmalen des Anspruchs 5. Ferner wird die Aufgabe gelöst mit einem Verfahren mit den Merkmalen des Anspruchs 12, sowie einer Recheneinheit mit den Merkmalen des Anspruchs 14 und einem Computerprogramm mit den Merkmalen des Anspruchs 15. Vorteilhafte Ausführungen und/oder Weiterbildungen sind Gegenstand der Unteransprüche, der Beschreibung und/oder den begleitenden Figuren. Insbesondere können die unabhängigen Ansprüche einer Anspruchskategorie auch analog zu den abhängigen Ansprüchen einer anderen Anspruchskategorie weitergebildet und/oder kombiniert sein. Ebenso können nachfolgend beschriebene Vorrichtungs- und Verfahrensmerkmale miteinander kombiniert und/oder weitergebildet werden

Zusammenfassend und mit anderen Worten dargestellt ergibt sich somit durch die Erfindung unter anderem ein Sternbildsimulator. Der Sternbildsimulator ist ausgebildet zum Einmessen und/oder Test eines auf einem Raumflugkörper montierten Sternsensors. Der Sternbildsimulator umfasst eine optische Vorrichtung. Die optische Vorrichtung ist zum Projizieren einer definierten Sternformation eines Sternkataloges konfiguriert. Insbesondere ist die optische Vorrichtung dazu konfiguriert die definierte Sternformation auf einen Raumflugkörper montierten Sternsensor zu projizieren. Weiterhin ist eine Abgleicheinheit vorgesehen. Die Abgleicheinheit weist eine Positions- und/oder Lagereferenz des Sternbildsimulators auf. Die Abgleicheinheit ist ferner konfiguriert, eine Positions- und/oder Lage des kalibrierten Sternbildsimulators im Raum zu erfassen. Die definierte Sternformation und die Positions- und/oder Lagereferenz liegen zueinander in einer ersten fest kalibrierten Rotation.

Im Sinne der vorliegenden Erfindung kann ein Sternbildsimulator als ein Werkzeug ausgebildet sein, um Sterne und/oder andere Himmelsobjekte in einer bestimmten Umgebung und zu einem bestimmten Zeitpunkt darzustellen und zu untersuchen. Es kann verwendet werden, um die Positionen der Sterne und Planeten zu bestimmen, die Sichtbarkeit von bestimmten Objekten zu simulieren und/oder nachzustellen. Ferner ist unter einem Einmessen ein Vorgang zu verstehen, um eine genaue Messung zu erhalten, um etwas zu bestimmen oder zu kalibrieren. Im Allgemeinen werden beim Einmessen verschiedene Messgeräte oder Instrumente verwendet, um die Position oder weitere Eigenschaften des Sternsensors zu bestimmen. Unter einem Testen kann das Überprüfen des Einmessens und/oder Test eines Sternsensors verstanden werden. Ferner kann im Sinne der vorliegenden Erfindung unter einer optischen Vorrichtung ein Gerät oder ein Instrument verstanden werden, das verwendet werden kann, um Licht bereitzustellen, zu sammeln, zu konzentrieren, zu projizieren oder zu modifizieren. Es kann aus einer Vielzahl von optischen Elementen wie einer Lichtquelle, Linsen, Spiegeln oder Prismen bestehen, die zusammen interagieren, um das Licht zu beeinflussen und auf zu projizierende Oberflächen zu senden und diese somit zu projizieren. Im Sinne der Erfindung ist unter Sternformationen ein Muster oder eine Konstellation von Sternen, die aus der Perspektive der Erde und/oder eines Raumflugkörpers betrachtet, eine bestimmte Form oder Gestalt haben, zu verstehen. Diese Muster können in einem Sternkatalog beschrieben werden. In diesem Sternkatalog können die Sternformationen auf verschiedene Weise klassifiziert werden. Ein Sternkatalog kann die Positionen und/oder die Helligkeit der Sterne und/oder andere astralen Körper, sowie Informationen über die Sterne selbst oder Kombinationen/Formationen von Sternen (ggf. auch Planeten und/oder weiterer Himmelskörper) und/oder ihre Bewegungen umfassen. Ferner ist im Sinne der vorliegenden Erfindung unter einer Abgleicheinheit eine bekannte Referenz zu verstehen, die eine Positions- und/oder Lagereferenz (ARF) aufweist. Die Positions- und/oder Lagereferenz (ARF) ist somit eine Methode oder ein System, das verwendet wird, um die Position und/oder Lage eines Objekts oder einer Einheit in Bezug auf eine bekannte Referenz zu bestimmen. Insbesondere kann unter Verwendung der Positions- und/oder Lagereferenz ARF (Alignment Reference Frame) eine hochgenaue 3-Achsen Rotationsmatrix zur Sternsensor Ausrichtungsreferenz (BRF) erfolgen. Ferner ist im Sinne der vorliegenden Erfindung unter einer ersten fest kalibrierten Rotation ($Q_{OSPS}$) die dem Sternbildsimulator innewohnende Transformation zwischen der Sternformation und der Abgleicheinheit zu verstehen.

Mit der Erfindung kann ermöglicht werden, dass bei einem Einmessen und/oder Testen des Sternsensors auf den Spiegelwürfel am Sternsensor selbst zu verzichten und damit, auf die aufwändige Alignment-Messung im Rahmen der Herstellung des Sternsensors zu verzichten. Der Sternsensor kann beim Hersteller/Konstrukteur des Raumflugkörpers eingemessen und/oder getestet werden. Somit wird durch die Erfindung der Fertigungsaufwand reduziert und ein hoher Fertigungsdurchlauf erreicht, wie er für Konstellationsprogramme notwendig ist. Ferner können die Kosten für das Testen und Einmessen reduziert werden. Ferner muss kein Spiegelwürfel am Sternsensor bzw. am Raumflugkörper verbaut bleiben, womit die Masse des Sternsensors, als auch des Raumflugkörpers reduziert ist.

In einer Ausführungsform das kalibrierten Sternbildsimulators ist vorgesehen, dass die optische Vorrichtung wenigstens eine Optik zusammen mit einer, insbesondere kohärenten, Lichtquelle und einer statischen Sternbildmaske mit der Sternformation des Sternbildkataloges aufweist. Mittels der optischen Vorrichtung kann eine Sternformation des Sternbildkataloges projiziert werden. Die Optik kann aus einer Linse oder einer Vielzahl an unterschiedlich oder gleich ausgebildeten Linsen aufgebaut sein. Die Linsen können Licht sammeln, fokussieren oder projizieren. Sie können verwendet werden, um das Licht von der kohärenten Lichtquelle zu sammeln und es auf einen bestimmten Punkt zu fokussieren, um es z.B. auf den Sternsensor zu projizieren. Linsen können auch verwendet werden, um das bereitgestellte Licht zu korrigieren, z.B. um Verzerrungen oder chromatische Aberrationen zu korrigieren. Sie können auch verwendet werden, um das bereitgestellte Licht zu modifizieren, z.B. um es zu polarisieren oder die Farbe zu ändern. Die kohärente Lichtquelle ist eine Lichtquelle, die monochromatisches und/oder phasenkohärentes Licht emittiert. Alternativ kann vorgesehen sein, dass die Vorrichtung eine statische oder dynamische Displayeinheit zur Darstellung der Sternformation des Sternkataloges aufweist. Eine statische Displayeinheit kann eine Anzeige umfassen, die keine Änderungen in Bezug auf den angezeigten Inhalt durchführt, sobald sie einmal aufgebaut ist. Es kann keine Bewegung oder Interaktion, sondern nur statischer Inhalt dargestellt werden. Eine dynamische Displayeinheit kann als eine Anzeige ausgebildet sein, die sich ändert oder animiert ist, um verschiedene Inhalte anzuzeigen. Beispielsweise kann die dynamische Displayeinheit als ein LED-Bildschirm ausgebildet sein, der verwendet wird, um statische Inhalte, oder Animationen oder andere bewegte Inhalte anzuzeigen.

In einer weiteren Ausführungsform des kalibrierten Sternbildsimulators ist vorgesehen, dass die fest kalibrierte Rotation in einer Quaternion Metrik ausgeführt ist. Die Quaternion Metrik ist ein Verfahren zur Messung der Ähnlichkeit oder Distanz zwischen zwei Quaternionen, die verwendet wird, um die Orientierung von Objekten oder die Änderung der Orientierung im Raum darzustellen. Eine Quaternion ist eine spezielle Form einer komplexen Zahl, die verwendet wird, um Rotationen im dreidimensionalen Raum darzustellen. Hiermit kann die Orientierung von Objekten bestimmt werden. In einer alternativen Ausführungsform kann vorgesehen sein, dass die fest kalibrierte Rotation in einer Rotationsmatrix ausgeführt ist. Eine Rotationsmatrix ist eine Matrix, die verwendet werden kann, um eine Rotation um eine bestimmte Achse oder um einen bestimmten Punkt im dreidimensionalen Raum darzustellen.

In einer weiteren Ausführungsform des kalibrierten Sternbildsimulators kann die Abgleicheinheit einen oder mehrere Spiegelwürfel aufweisen oder als ein Spiegelwürfel ausgebildet sein. Jede der Seiten des Spiegelwürfels kann eine eindeutige zuweisbare Kalibrierrotation in Form einer Rotationsmatrix oder eines Quaternions aufweisen. Die Seiten sind als Spiegel ausgeführt. Über den/die Spiegelwürfel kann die Lage im Raum messtechnisch erfasst werden.

In einer weiteren Ausführungsform des kalibrierten Sternbildsimulators kann die Abgleicheinheit ein Prisma oder mehrere Prismen aufweisen oder als ein Prisma ausgebildet sein. Jede der Seiten des Prismas / der Prismen kann eine eindeutige zuweisbare Kalibrierrotation in Form einer Rotationsmatrix oder eines Quaternions aufweisen. Über das/die Prisma / Prismen kann die Lage im Raum messtechnisch erfasst werden.

In einer weiteren Ausführungsform des kalibrierten Sternbildsimulators kann die Abgleicheinheit eine oder mehrere polierte Flächen aufweisen. Jede der polierten Flächen kann eine eindeutige zuweisbare Kalibrierrotation in Form einer Rotationsmatrix oder eines Quaternions aufweisen. Die polierten Flächen sind reflektierend/spiegelnd ausgebildet. Über die polierte Fläche/n kann die Lage im Raum messtechnisch erfasst werden.

In einer weiteren Ausführungsform des kalibrierten Sternbildsimulators kann die Abgleicheinheit als eine oder mehrere reflektierende Flächen ausgebildet sein. In einer Ausführungsform können die reflektierenden Flächen als reflektierende Klebepads ausgebildet sein. Jede reflektierende Fläche oder Klebepad kann eine eindeutige zuweisbare Kalibrierrotation in Form einer Rotationsmatrix oder eines Quaternions aufweisen. Mittels der Klebepads kann mit geringem zeitlichem und materiellem Aufwand eine Referenz ausgebildet werden. Über die reflektierende/n Fläche/n bzw. Klebepad/s kann die Lage im Raum messtechnisch erfasst werden.

Ein zweiter Aspekt der Erfindung bezieht sich auf das System zum Einmessen und/oder Test eines auf einem Raumflugkörper montierten Sternsensors. Das System beinhaltet einen Sternsensor. Der Sternsensor ist vorzugsweise auf einem Raumflugkörper montiert / montierbar. Der Sternensensor weist eine Sensoroptik auf. Die Sensoroptik weist eine Ausrichtungsreferenz und der Sternsensor eine mechanische Positions- und/oder Lagereferenz mit Bezug auf den Raumflugkörper auf. Die Ausrichtungsreferenz und die mechanische Positions- und/oder Lagereferenz liegen zueinander in einer zweiten Rotation. Das System beinhaltet ferner einen erfindungsgemäßen kalibrierten Sternbildsimulator. Der kalibrierte Sternbildsimulator ist im Raum um den Raumflugkörper angeordnet/ anordenbar. Der kalibrierte Sternbildsimulator kann auf dem Sternsensor anordenbar oder angeordnet sein und/oder werden. Beispielsweise kann der kalibrierte Sternbildsimulator auf dem Sternsensor aufsetzbar oder aufgesetzt sein. Zudem beinhaltet das System eine Erfassungseinheit. Die Erfassungseinheit ist auf dem Raumflugkörper montiert / montierbar. Die Erfassungseinheit ist zum Erfassen von wenigstens einem Merkmal der Abgleicheinheit des kalibrierten Sternbildsimulators konfiguriert. Das System ist zum Einmessen des Sternsensors eingerichtet. Erfindungsgemäß umfasst das Einmessen des Sternsensors ein Ermitteln von wenigstens einem Merkmal der Abgleicheinheit durch die Erfassungseinheit nach einem Überführen der Ausrichtungsreferenz zu der Positions- und/oder Lagereferenz unter Verwendung der zweiten Rotation und der fest kalibrierten Rotation.

Im Sinne der vorliegenden Erfindung ist unter einer Sensoroptik eine Optik zu verstehen, die verwendet wird, um Licht auf den Sternsensor zu fokussieren oder zu leiten. Die Sensoroptik kann ein oder mehrere Linsen oder Spiegel umfassen, die das Licht sammeln, fokussieren oder projizieren, um es auf den Sternsensor zu leiten. Die Sensoroptik kann auch verwendet werden, um das Licht zu korrigieren oder zu modifizieren, um die Leistung und Genauigkeit des Sternsensor zu verbessern. Die Sensoroptik weist eine Ausrichtungsreferenz (BRF) auf. Unter der Ausrichtungsreferenz (BRF) kann die Ausgabe der Winkelmessung im Boresight Reference System des Sternsensors verstanden werden. Es kann verwendet werden, um die relative Orientierung des Sternsensors innerhalb des Raumflugkörpers oder bspw. einer Plattform zueinander zu bestimmen. Im Sinne der vorliegenden Erfindung ist die zweite Rotation ($Q_{STR}$) das durch von dem Sternsensor ausgegebene Quaternion. Es beschreibt die 3-Achsen Rotation zwischen der Sternformation und der Ausrichtungsreferenz des Sternsensors. Ferner ist im Sinne der vorliegenden Erfindung unter einer mechanischen Positions- und/oder Lagereferenz (MRF) die Position zu verstehen, die die Montageposition des Sternsensors zum Raumflugkörper beschreibt.

In einer Ausführungsform des Systems umfasst das Ermitteln des wenigsten eines Merkmals durch die Erfassungseinheit ein optisches Erfassen unter Verwendung einer optischen Erfassungseinheit. Die optische Erfassungseinheit kann als ein Laser ausgebildet sein. Die Erfassungseinheit ist an dem Raumflugkörper montiert / montierbar. Die Position der Erfassungseinheit ist bekannt und kann das Raumflugkörperreferenzsystem (SCRF) umfassen. Zusätzlich oder alternativ kann die Erfassungseinheit und/oder der Raumflugkörper das Raumflugkörperreferenzsystem (SCRF) umfassen. Der Laser kann ausgebildet sein, optisch ein Merkmal der Abgleicheinheit, insbesondere eine projizierte Sternformation oder ein Teil einer projizierten Sternformation zu erfassen.

In einer weiteren Ausführungsform des Systems erfolgt das optische Erfassen unter Verwendung von Autokollimation. Die Autokollimation umfasst das Messen der Position und/oder Orientierung von optischen Elementen. Es basiert auf der Verwendung von Licht, das von einem optischen Element, insbesondere der Abgleicheinheit reflektiert wird und auf ein weiteres Element zurückfällt. Wenn die Position und Orientierung der beiden optischen Elemente richtig sind, sollten die reflektierten Lichtspuren übereinstimmen und aufeinandertreffen.

In einer weiter Ausführungsform des Systems sind oder werden die fest kalibrierte Rotation in einer Quaternion Metrik oder in einer Rotationsmatrix ausgeführt.

In einer weiteren Ausführungsform des Systems wird das Überführen durch die folgende Formel ermittelt:

$$Q_{ARF}(BRF, IRF) = Inv(Q_{STR} \times Q_{OSPS})$$

wobei 'Q$_{ARF}$' das Überführen, 'Inv' der Operator für die Inversion eines Quaternions, 'Q$_{STR}$' das durch den Sternsensor ausgegebene Quaternion,' $\times$ ' den Operator für die Quaternion Multiplikation, und 'Q$_{OSPS}$' die kalibrierte Rotation darstellt. Durch diese Überführung und die Anwendung der Quaternions Transformation ist das Sternsensor BRF über die Abgleicheinheit des Sternbildsimulators von außen optisch an-messbar.

In einer weiteren Ausführungsform des Systems erfolgt das Einmessen des Sternsensors auf ein Referenzsystem des Raumflugkörpers. Unter Verwendung des Referenzsystems des Raumflugkörpers kann die gesuchte 3-Achsen Rotation bestimmt werden.

In einer weiteren Ausführungsform des Systems ist der Raumflugkörper als ein Satellit oder als eine Raumkapsel oder als ein Raumfahrzeug ausgebildet. Das System kann den Raumflugkörper umfassen. Der Raumflugkörper kann zur Erdbeobachtung, beispielsweise zur hochauflösenden Erdbeobachtung, sein. Der Raumflugkörper kann eine Drohne, ein Flugzeug, ein Satellit, insbesondere künstlicher Satellit, beispielsweise ein Erdsatellit, eine Raumsonde, beispielsweise ein Orbiter, eine Rakete, eine Raumfähre, ein Raumschiff, ein Raumfahrzeug, eine Raumkapsel, eine Raumstation oder dergleichen sein. Der Raumflugkörper kann dazu ausgebildet sein, sich im Weltraum zu bewegen oder dorthin gebracht zu werden. Der Raumflugkörper kann ein Weltraumflugkörper sein. Der Raumflugkörper kann dazu ausgebildet sein, in eine Erdumlaufbahn gebracht zu werden und/oder sich in einer Erdumlaufbahn fortzubewegen und/oder zu schweben. Der Raumflugkörper kann ausgebildet sein, sich in einer Höhe von beispielsweise etwa 100 m, 10 km und/oder 1000 km oder mehr fortzubewegen und/oder zu schweben. Der Raumflugkörper kann dazu ausgebildet sein, in eine Umlaufbahn eines Planeten und/oder Himmelskörpers, gebracht zu werden und/oder sich in einer Umlaufbahn des Planeten bzw. Himmelskörpers fortzubewegen und/oder zu schweben. Der Himmelskörper kann beispielsweise ein Plantet, Stern, Mond, Asteroid, etc. sein. Der Raumflugkörper kann einen Antrieb, wie Triebwerk, Raketenantrieb und/oder Brems- und/oder Steuerdüsen, oder dergleichen, aufweisen.

Gemäß einem dritten Aspekt betrifft die Erfindung ein Verfahren zum Einmessen und/oder Test eines auf einem Raumflugkörper montierten Sternsensors unter Verwendung eines kalibrierten Sternbildsimulators. Das erfindungsgemäße Verfahren umfasst folgende Verfahrensschritte. In einem ersten Verfahrensschritt erfolgt ein Erfassen einer zweiten Rotation. Die zweite Rotation ergibt sich aus einer zueinander liegenden Ausrichtungsreferenz und einer mechanischen Positions- und/oder Lagereferenz. Die Ausrichtungsreferenz ist eine Referenz einer Sensoroptik des Sternsensors und die mechanische Positions- und/oder Lagereferenz ist eine Referenz des Sternsensors mit Bezug auf den Raumflugkörper. In einem zweiten Verfahrensschritt erfolgt ein Überführen der Ausrichtungsreferenz zu einer Positions- und/oder Lagereferenz eines kalibrierten Sternbildsimulators unter Verwendung der zweiten Rotation und einer ersten fest kalibrierten Rotation. In einem dritten Verfahrensschritt erfolgt ein Einmessen des Sternsensors durch ein Ermitteln von wenigstens einem Merkmal einer Abgleicheinheit des kalibrierten Sternbildsimulators durch eine auf dem Raumflugkörper montierte Erfassungseinheit.

Gemäß einer Ausführungsform des erfindungsgemäßen Verfahrens umfasst ein weiterer Schritt ein Auslesen einer fest kalibrierten Rotation, die sich aus einer definierten Sternformation eines Sternkataloges und einer Positions- und/oder Lagereferenz einer Abgleicheinheit eines kalibrierten Sternbildsimulators ergibt. Die fest kalibrierte Rotation umfasst die dem Sternsensor innewohnende Transformation und kann aus einem Speicher ausgelesen, insbesondere einem Speicher des Sternbildsimulators, der Recheneinheit und/oder des Raumflugkörpers ausgelesen werden.

Gemäß einem vierten Aspekt betrifft die Erfindung eine Recheneinheit. Die Recheneinheit weist eine Prozessoreinheit, eine Kommunikationsschnittstelle und eine Speichereinheit auf. Die Recheneinheit ist zur Verwendung in einem kalibrierten Sternbildsimulator ausgebildet. Die Recheneinheit ist ferner zum Einmessen und/oder Test eines auf einem Raumflugkörper montierten Sternsensors ausgebildet. Die Recheneinheit kann eine Prozessoreinheit, eine Speichereinheit und eine Kommunikationsschnittstelle aufweisen. Die Recheneinheit kann ferner weitere Komponenten aufweisen. Die Prozessoreinheit steht mit der Speichereinheit und der Kommunikationsschnitte, vorzugsweise über ein Kommunikationsmedium in Datenkommunikation. Das Kommunikationsmedium kann derart ausgebildet, dass verschiedene Kommunikationsprotokolle zur Datenkommunikation verwendet werden können. Im Sinne der vorliegenden Erfindung ist unter einer Recheneinheit ein System zu verstehen, welches entsprechende Daten als Eingabe empfängt und gemäß einem vorgegeben Programm Ausgangssignale bereitstellt. Die Ausgangssignale können dem Sternbildsimulator bereitgestellt werden, so dass die Transformation ermittelt wird. Die Steuervorrichtung kann eine Prozessoreinheit umfassen, die dazu eingerichtet ist, eine Ausführungsform des erfindungsgemäßen Verfahrens auszuführen. Die Prozessoreinheit kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinheit Programmcode aufweisen, der dazu eingerichtet ist, bei Ausführung durch die Prozessoreinheit die Ausführungsform des erfindungsgemäßen Verfahrens durchzuführen. Der Programmcode kann in eine Speichereinheit der Prozessoreinheit und/oder Recheneinheit gespeichert sein. Die Prozessorschaltung der Prozessoreinheit kann z.B. zumindest eine Schaltungsplatine und/oder zumindest ein SoC (System on Chip) aufweisen.

Gemäß einem fünften Aspekt betrifft die Erfindung ein Computerprogramm. Die vorstehend beschriebenen, erfindungsgemäßen Ausführungsformen des Verfahrens gemäß dem dritten Aspekt der Erfindung können auch als ein Computerprogramm ausgebildet sein, wobei eine Recheneinheit (bspw. ein Computer, Mikrokontroller, FPGA, SPS, usw.) zur Durchführung des oben beschriebenen, erfindungsgemäßen Verfahrens veranlasst wird, wenn das Computerprogramm auf einer Recheneinheit bzw. auf einem Prozessor der Recheneinheit ausgeführt wird. Das Computerprogramm kann, beispielsweise als Signal, per Download bereitgestellt oder in einer Speichereinheit der Rechnereinheit mit darin enthaltenem computer-lesbarem Programmcode gespeichert werden, um die Recheneinheit zur Ausführung von Anweisungen gemäß dem oben genannten Verfahren zu veranlassen. Dabei kann das Computerprogramm auch auf einem maschinenlesbaren Speichermedium gespeichert sein. Eine alternative Aufgabenlösung sieht ein Speichermedium vor, das zur Speicherung des vorstehend beschriebenen Verfahrens (als Programmcode) bestimmt ist und von einem Computer oder einem Prozessor des Computers lesbar ist.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Dabei können auch Einzelaspekte als Verbesserung oder Ergänzungen zu der jeweiligen Grundform der vorliegenden Erfindung hinzugefügt werden. Insbesondere können Merkmale der Verfahrensansprüche durch entsprechende Komponenten des Sternbildsimulators oder des Systems umgesetzt und/oder ausgeführt werden, wonach diese deren Funktionalität ergänzen bzw. erweitern. Somit können auch auch Aspekte der Verfahrensansprüche für den Sternbildsimulator oder das System herangezogen werden.

Nachfolgend werden Ausführungsbeispiele der Erfindung unter Bezugnahme auf Figuren näher beschrieben, dabei zeigen schematisch und beispielhaft:

Fig. 1 eine schematische Darstellung eines kalibrierten Sternbildsimulators gemäß einer Ausführungsform der Erfindung;

Fig. 2 eine schematische Darstellung eines Systems gemäß einer Ausführungsform der Erfindung;

Fig. 3 ein Ablaufdiagramm eines Verfahrens gemäß einer Ausführungsform der Erfindung, und

Fig. 4 eine schematische Darstellung einer Recheneinheit gemäß einer Ausführungsform der Erfindung.

Die beiliegenden Figuren sollen ein weiteres Verständnis der Ausführungsformen der Erfindung vermitteln. Sie veranschaulichen Ausführungsformen dienen im Zusammenhang mit der Beschreibung der Erklärung von Prinzipien und Konzepten der Erfindung. Andere Ausführungsformen und viele der genannten Vorteile ergeben sich im Hinblick auf die Figuren. Die Elemente der Figuren sind nicht notwendigerweise maßstabsgetreu zueinander gezeigt. In den Figuren sind gleiche, funktionsgleiche, und gleich wirkende Elemente, Merkmale und Komponenten - sofern nichts anderes ausgeführt ist - jeweils mit denselben Bezugszeichen versehen.

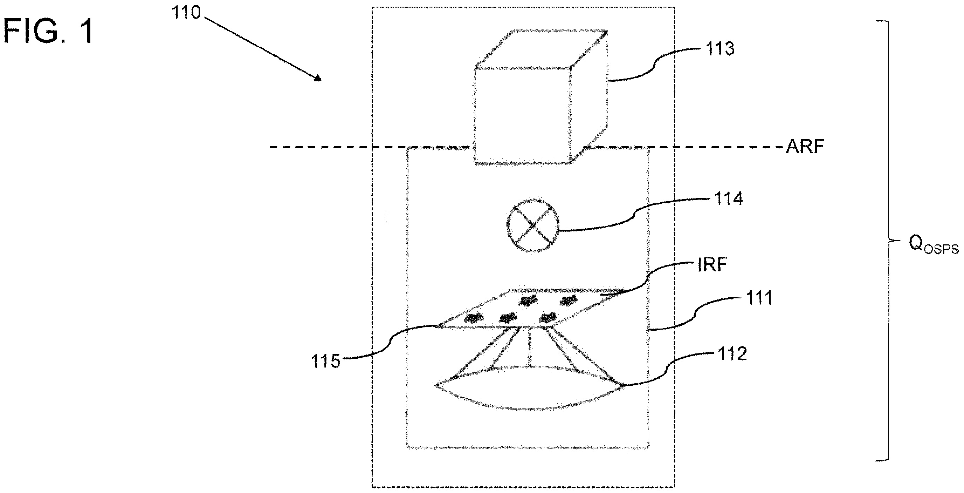

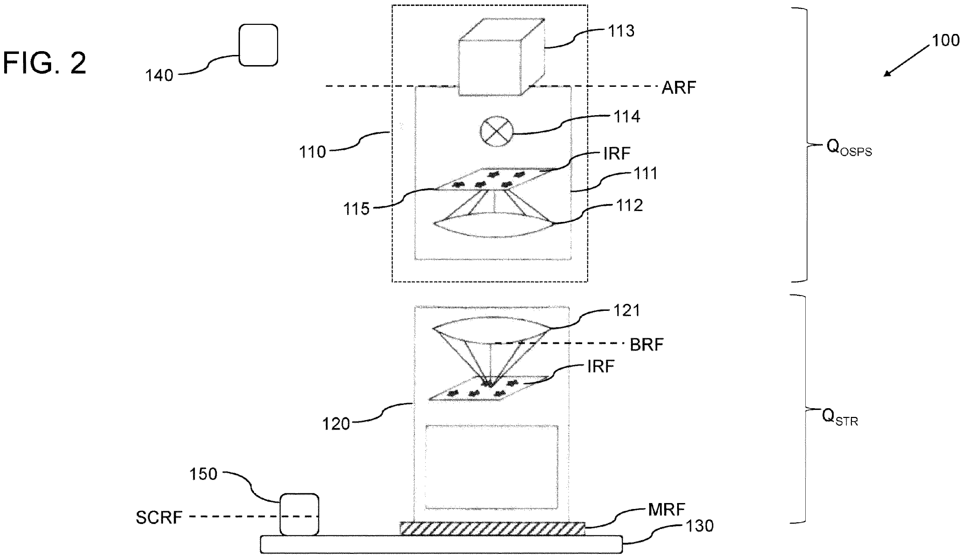

Fig. 1 zeigt eine schematische Darstellung eines kalibrierten Sternbildsimulators gemäß einer Ausführungsform der Erfindung. In Fig. 1 bezeichnet Bezugszeichen 110 den erfindungsgemäßen kalibrierten Sternbildsimulator. Der Sternbildsimulator 110 ist zum Einmessen und/oder Test eines auf einem Raumflugkörper 130, bspw. einem Satelliten, einer Raumkapsel oder eines Raumfahrzeugs, montierten Sternsensors ausgebildet. Der kalibrierte Sternbildsimulator 110 umfasst eine optische Vorrichtung 111 und eine Abgleicheinheit 113. Die optische Vorrichtung 111 ist konfiguriert, eine definierte Sternformation IRF eines Sternkataloges vorzugsweise auf einen Raumflugkörper 130 montierten Sternsensor 120 (vgl. Fig. 2) zu projizieren. Ferner umfasst der Sternbildsensor 110 die Abgleicheinheit 113 mit einer Positions- und/oder Lagereferenz ARF des kalibrierten Sternbildsimulators 110 konfiguriert für ein Erfassen einer Position- und/oder Lage des kalibrierten Sternbildsimulators 110 im Raum, wobei die definierte Sternformation IRF und die Positions- und/oder Lagereferenz ARF in einer ersten fest kalibrierten Rotation $Q_{OSPS}$ zueinander liegen.

Mit dem erfindungsgemäßen Sternbildsimulator 110 kann auf einen am Sternsensor montierten Spiegelwürfel verzichtet werden, und damit, auch auf die aufwendige Alignment-Messung im Rahmen der Fertigung eines Sternsensors. Durch die vorliegende Erfindung kann ein höherer Produktionsdurchsatz erzielt werden, wie es für ein Konstellationsprogramm notwendig ist. Ferner können Zeit-, Kosten- und Masseersparnisse für den Sternsensor erzielt werden. Durch die vorliegende Erfindung wird der erfindungsgemäße Sternbildsimulator 110 mit einer Alignment-Referenz ausgestattet. Der Sternbildsensor 110 umfasst somit eine optische Referenz bestehend aus einer Abgleicheinheit 113. Die Abgleicheinheit 113 kann eine Einheit aus der folgenden Gruppe von Einheiten aufweisen oder derart ausgebildet sein: ein oder mehrere Spiegelwürfel, ein oder mehrere Prisma/Prismen, eine oder mehrere polierte Flächen, und/oder ein oder mehrere reflektierende Elemente, bspw. Klebepads. Die optische Referenz ist derart ausgebildet, um ihre Lage im Raum messtechnisch zu erfassen.

Die dem Sternbildsimulator 110 innewohnende Transformation $Q_{OSPS}$ (IRF -> ARF) als fixe Rotation zwischen der Sternformation IRF (Inertial Reference Frame) umfassend ein reelles Sternmuster aus einem Sternkatalog und der Positions- und/oder Lagereferenz ARF der Abgleicheinheit 113 (Alignment Referenz Frame) wird zum Referenzieren der Abgleicheinheit 113 am Sternbildsimulator zum BRF des Sternsensors $Q_{STR}$ (IRF -> BRF) über dessen gemeinsame Quaternion $Q_{STR}$ genutzt. Somit kann über die gemessene Quaternion $Q_{STR}$ und die kalibrierte Rotation $Q_{OSPS}$ das Sternsensor 120 BRF an das Sternbildsimulator 110 ARF wie folgt:

$$Q_{ARF}(BRF, IRF) = Inv(Q_{STR} \times Q_{OSPS})$$

eingebunden werden. Die kalibrierte Rotation $Q_{OSPS}$ kann in einer Quaternion Metrik $Q_{OSPS}$ oder in einer Rotationsmatrix $A_{OSPS}$ ausgeführt werden. Somit wird der erfindungsgemäße Sternbildsimulator 110 zu einem Kalibriernormal, um Sternsensoren 120 an einem Raumflugkörper 130 (vgl. Fig. 2) durch einen Integrator zum Referenzsystem des Raumflugkörpers SCRF (vgl. Fig. 2) einzumessen und/oder zu testen. Es kann vorgesehen sein, dass der Sternbildsimulator 110 bei dem Hersteller einmalig kalibriert wird. Hierbei erhält jede Seite der Abgleicheinheit 113 eine eindeutig zuweisbare Kalibrierrotation, bspw. in Form einer Rotationsmatrix oder eines Quaternions. Mittels der optischen Vorrichtung 111 kann eine bekannte Sternformation aus einem Sternkatalog durch eine Optik der optischen Vorrichtung 111 auf den Sternsensor 120 (vgl. Fig. 2) projiziert werden. Der kalibrierte Sternbildsimulator 110 kann zur Einmessung und/oder Testen eines bereits an einem Raumflugkörper 130 montierten Sternsensors 120 eingesetzt werden.

Fig. 2 zeigt eine schematische Darstellung eines Systems gemäß einer Ausführungsform der Erfindung. In Fig. 2 bezeichnet Bezugszeichen 100 das erfindungsgemäße System mit einem Raumflugkörper 130. Auf dem Raumflugkörper 130 ist ein Sternsensor 120 montiert. Ferner weist der Raumflugkörper 130 eine Erfassungseinheit 150 auf. Zudem weist das System 100 den erfindungsgemäßen kalibrierten Sternbildsimulator 110 auf.

Der Sternsensor 120 ist vorzugsweise auf dem Raumflugkörper 130 montiert und weist eine Sensoroptik 121 auf. Die Sensoroptik 121 weist eine Ausrichtungsreferenz BRF auf. Der Sternsensor 120 weist eine mechanische Position- und/oder Lagereferenz MRF mit Bezug auf den Raumflugkörper 130 auf. Die Ausrichtungsreferenz BRF und die mechanische Position- und/oder Lagereferenz MRF liegen zueinander in einer zweiten Rotation $Q_{STR}$.

Der kalibrierte Sternbildsimulator 110 kann im Raum um den Raumflugkörper 130 angeordnet sein. Insbesondere kann der kalibrierte Sternbildsimulator 110 auf dem Sternsensor 120 angeordnet und/oder aufgesetzt sein. Die Erfassungseinheit 150 ist auf dem Raumflugkörper 130 montiert und zum Erfassen von wenigstens einem Merkmal der Abgleicheinheit 113 des kalibrierten Sternbildsimulators 110 konfiguriert. Das System 100 ist zum Einmessen eingerichtet, das ein Ermitteln von wenigstens einem Merkmal der Abgleicheinheit 113 durch die Erfassungseinheit 150 nach einem Überführen der Ausrichtungsreferenz BRF zu der Positions- und/oder Lagereferenz ARF unter Verwendung der zweiten Rotation $Q_{STR}$ und der fest kalibrierten Rotation $Q_{OSPS}$ umfasst.

Das System 100 weist ferner die erfindungsgemäße Recheneinheit 140 auf. Die Recheneinheit 140 kann zentral oder dezentral angeordnet sein und über ein Kommunikationsmedium, bspw. Signalleitungen und/oder BUS-System und/oder Ethernet und/oder WLAN, in Datenkommunikation mit dem System 100 und/oder dem Sternbildsimulator 110 und/oder dem Sternsensor 120 stehen. Alternativ kann die Recheneinheit 140 in eine Cloud ausgelagert sein.

Mit dem erfindungsgemäßen System 100 und dem erfindungsgemäßen kalibrierten Sternbildsimulator 110 kann ein Integrator / Benutzer den Sternsensor 120 nach dessen Montage an einem Raumflugkörper 130 selbst einmessen und/oder testen. Es wird keine aufwendige Messtechnik für das Einmessen und/oder Testen benötigt. Das System 100 nutzt mittels einer kalibrierten Sternformation IRF eines Sternkataloges des Sternsensors die vom Sternsensor gelieferte Rotation $Inv(Q_{STR})$ vom BRF in das IRF und die fest kalibrierte Sternbildsimulator 110 Rotation $Q_{OSPS}$ vom IRF in das ARF, um das Sternsensor 120 BRF nach außen sichtbar (anmessbar) zu machen. Zur Berechnung kann die Quaternion Darstellung (Quaternion Metrik mit $Q_{OSPS}$) oder Rotationsmatrizen (klassische Rotationsmatrix $A_{OSPS}$) verwendet werden. Das System 100 verwendet den kalibrierten Sternbildsimulator 110, dessen 3-Achsen Rotation zwischen der ausgegebenen Sternformation IRF des Sternbildsimulators 110 und der Positions- und/oder Lagereferenz ARF der fest montierten Abgleicheinheit 113 bekannt ist. Das durch den Sternsensor 120 bereitgestellte Quaternion $Q_{STR}$ beschreibt die 3-Achsen Rotation zwischen dem IRF und dem BRF des Sternsensors 120. Die bekannten 3-Achsen Rotationen STR und OSPS überführen das Sternsensor BRF zum ARF des kalibrierten Sternbildsimulators 110 durch die folgende Beziehung:

$$Q_{ARF}(BRF, IRF) = Inv(Q_{STR} \times Q_{OSPS}).$$

Durch die Überführung und die Anwendung der Quaternion Transformation ist das Sternsensor 120 BRF über die Abgleicheinheit 113 des kalibrierten Sternbildsimulators 110 von außen optisch, bspw. mittels Autokollimation, an-messbar. Die gesuchte 3-Achsen Rotation zum Referenzsystem des Raumflugkörpers SCRF kann ermittelt werden. Beispielsweise kann diese durch einen Integrator / Benutzer ermittelt werden.

Das Sternbildsimulator 110 ARF weist zum IRF über die $Q_{OSPS}$ eine feste kalibrierte Beziehung auf, womit der kalibrierte Sternbildsimulator 110 in beliebiger Orientierung zum Sternsensor 120 aufgesetzt werden kann. Es darf keine optische Feldbeschneidung zwischen dem kalibrierten Sternbildsimulator 110 und dem Sternsensor 120 stattfinden. Der kalibrierte Sternbildsimulator 110 kann mit beliebiger Roll-Orientierung (z-Achse) aufgesetzt werden. Für ein Ausrichten in der x-y-Achse ohne eine optische Feldbeschneidung kann eine entsprechende Aufsetzvorrichtung eingesetzt werden. Mittels der vorliegenden Erfindung kann der Sternbildsimulator 110 als Alignment-Kalibriernormal zum Einmessen und/oder Testen von auf Raumflugkörpern 130 montierten Sternsensoren 120 eingesetzt werden.

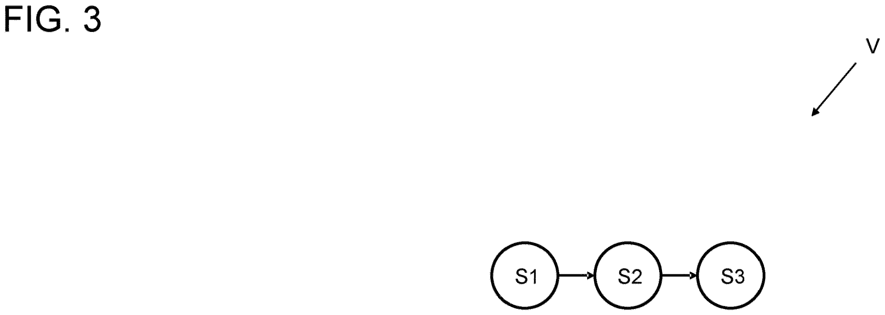

Fig. 3 zeigt ein Ablaufdiagramm eines Verfahrens gemäß einer Ausführungsform der Erfindung. Das Verfahren V umfasst bei der dargestellten Ausführungsform mehrere Verfahrensschritte. In einem ersten Verfahrensschritt S1 erfolgt ein Erfassen einer zweiten Rotation $Q_{STR}$ die sich aus einer zueinander liegenden Ausrichtungsreferenz BRF und einer mechanischen Position- und/oder Lagereferenz MRF ergibt. Die Ausrichtungsreferenz BRF ist eine Referenz einer Sensoroptik 121 des Sternsensors 120 und die mechanischen Position- und/oder Lagereferenz MRF ist eine Referenz des Sternsensors 120 mit Bezug auf den Raumflugkörper 130.

In einem weiteren Verfahrensschritt S2 erfolgt ein Überführen der Ausrichtungsreferenz BRF zu einer Positions- und/oder Lagereferenz ARF eines kalibrierten Sternbildsimulators 110 unter Verwendung der zweiten Rotation $Q_{STR}$ und einer ersten fest kalibrierten Rotation $Q_{OSPS}$.

In einem weiteren Verfahrensschritt S3 erfolgt ein Einmessen S3 des Sternsensors 120 durch ein Ermitteln von wenigstens einem Merkmal einer Abgleicheinheit 113 des kalibrierten Sternbildsimulators 110 durch eine auf dem Raumflugkörper 130 montierte Erfassungseinheit 150.

Weiterhin kann ein Auslesen einer fest kalibrierten Rotation $Q_{OSPS}$ vorgesehen sein, die sich aus einer definierten Sternformation IRF eines Sternkataloges und einer Positions- und/oder Lagereferenz ARF einer Abgleicheinheit 113 eines kalibrierten Sternbildsimulators 110 ergibt.

Die Reihenfolge der Verfahrensschritte, insbesondere wie sie in der dargestellten Ausführungsform beschrieben ist, und/oder Teilaspekte der Verfahrensschritt, wo es sinnvoll ist, können auch geändert und/oder getauscht werden.

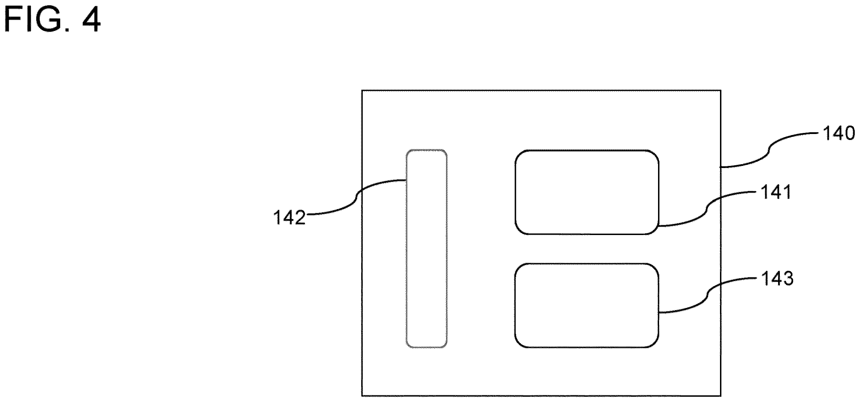

Fig. 4 zeigt eine schematische Darstellung einer Recheneinheit gemäß einer Ausführungsform der Erfindung. In Fig. 4 bezeichnet Bezugszeichen 140 die erfindungsgemäße Recheneinheit zur Verwendung in einem kalibrierten Sternbildsimulator 110. Mit der Recheneinheit 140 kann ein Einmessen und/oder Test eines auf einem Raumflugkörper 130 (vgl. Fig. 2) montierten Sternsensors 120 erfolgen. Die Recheneinheit 140 kann als ein Computer, Steuergerät bzw. als eine Steuereinheit in dem System 100 (vgl. Fig. 2) implementiert werden. Alternativ kann die Recheneinheit 140 in einer Cloud ausgelagert implementiert werden. Die Daten werden über eine Datenkommunikation zwischen der Recheneinheit 140 in der Cloud und dem System 100 über eine Kommunikationsverbindung / Daten komm unikationsverbindung ausgetauscht.

Die Recheneinheit 140 weist eine Speichereinheit 141 auf. In der Speichereinheit 141 kann das Verfahren zum Einmessen und/oder Test eines auf einem Raumflugkörper 130 montierten Sternsensor 120 unter Verwendung eines kalibrierten Sternbildsimulators 110 (vgl. Fig. 2) als Programmcode gespeichert werden. Die Recheneinheit 140 weist ferner eine Prozessoreinheit 143 auf. Die Prozessoreinheit 143 ist ausgebildet das erfindungsgemäße Verfahren und die Verfahrensschritte auszuführen. Die Prozessoreinheit 143 steht in Datenkommunikation mit der Speichereinheit 141 über eine Kommunikationsschnittstelle 142. Die Kommunikationsschnittstelle 142 kann entsprechende Kommunikationsprotokolle und Hardwareimplementierung zur Kommunikation umfassen. Ferner ist die Kommunikationsschnittstelle 142 ausgebildet eine Datenkommunikation mit der Recheneinheit 140 und dem System 100 (vgl. Fig. 2) und den Komponenten des Systems 100 bereitzustellen. Zudem kann die Kommunikationsschnittstelle 142 für die Kommunikation des Systems 100 mit der Cloud ausgebildet sein.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen. Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden. Die Reihenfolge und/oder Anzahl der Schritte des Verfahrens kann variiert werden.

Bezugszeichen

| 100 | System |
| 110 | Kalibrierter Sternbildsimulator |
| 111 | optische Vorrichtung des kalibrierten Sternbildsimulators |
| 112 | Optik der optischen Vorrichtung |
| 113 | Abgleicheinheit |
| 114 | kohärente Lichtquelle |
| 115 | statische Sternbildmaske / statische oder dynamische Displayeinheit |
| 120 | Sternsensor |
| 121 | Sensoroptik |
| 130 | Raumflugkörper |
| 140 | Recheneinheit |
| 141 | Speichereinheit |
| 142 | Kommunikationsschnittstelle |
| 143 | Prozessoreinheit |
| 150 | Erfassungseinheit |
| ARF | Positions- und/oder Lagereferenz des kalibrierten Sternbildsimulators |
| $A_{OSPS}$ | Rotationsmatrix |
| BRF | Ausrichtungsreferenz |
| IRF | Sterninformation |
| MRF | mechanische Positions- und/oder Lagereferenz des Sternsensors |
| $Q_{OSPS}$ | erste fest kalibrierte Rotation |
| $Q_{STR}$ | zweite Rotation |
| SCRF | Referenzsystem des Raumflugkörpers |
| V | Verfahren |
| S1-S3 | Verfahrensschritte |

**Patentansprüche**

1. Kalibrierter Sternbildsimulator (110) zum Einmessen und/oder Test eines auf einem Raumflugkörper (130) montierten Sternsensors (120), umfassend:

 - eine optische Vorrichtung (111) konfiguriert zum Projizieren einer definierten Sternformation (IRF) eines Sternkataloges vorzugsweise auf einen Raumflugkörper (130) montierten Sternsensor (120), und
 - eine Abgleicheinheit (113) mit einer Positions- und/oder Lagereferenz (ARF) des kalibrierten Sternbildsimulators (110) konfiguriert für ein Erfassen einer Position- und/oder Lage des kalibrierten Sternbildsimulators (110) im Raum, wobei die definierte Sternformation (IRF) und die Positions- und/oder Lagereferenz (ARF) in einer ersten fest kalibrierten Rotation ($Q_{OSPS}$) zueinander liegen.

2. Kalibrierter Sternbildsimulator (110) nach Anspruch 1, wobei die optische Vorrichtung (111) wenigstens eine Optik (112) zusammen mit einer, insbesondere kohärenten, Lichtquelle (114) und einer statischen Sternbildmaske (115) mit der Sternformation (IRF) des Sternbildkataloges oder eine statische oder dynamische Displayeinheit (115) zur Darstellung der Sternformation (IRF) des Sternkataloges aufweist.

3. Kalibrierter Sternbildsimulator (110) nach wenigstens einem der vorhergehenden Ansprüche, wobei die fest kalibrierte Rotation ($Q_{OSPS}$) in einer Quaternion Metrik ($Q_{OSPS}$) oder in einer Rotationsmatrix ($A_{OSPS}$) ausgeführt ist.

4. Kalibrierter Sternbildsimulator (110) nach wenigstens einem der vorhergehenden Ansprüche, wobei die Abgleicheinheit (113) zumindest eine Einheit aus der folgenden Gruppe von Einheiten aufweist oder derart ausgebildet ist: ein oder mehrere Spiegelwürfel, ein oder mehrere Prisma/Prismen, eine oder mehrere polierte Flächen, und/oder ein oder mehrere reflektierende Elemente.

5. System (100) zum Einmessen und/oder Test eines auf einem Raumflugkörper (130) montierten Sternsensors (120), mit:

 - einem Sternsensor (120), welcher vorzugsweise auf einem Raumflugkörper (130) montiert ist und eine Sensoroptik (121) aufweist, wobei die Sensoroptik (121) eine Ausrichtungsreferenz (BRF) und der Sternsensor (120) eine mechanische Position- und/oder Lagereferenz (MRF) mit Bezug auf den Raumflugkörper (130) aufweist, und wobei die Ausrichtungsreferenz (BRF) und die mechanische Position- und/oder Lagereferenz (MRF) in einer zweiten Rotation ($Q_{STR}$) zueinander liegen;
 - einem kalibrierten Sternbildsimulator (1 10) nach wenigstens einem der vorherigen Ansprüche, angeordnet im Raum um den Raumflugkörper (130); und
 - einer auf den Raumflugkörper (130) montierten Erfassungseinheit (150), konfiguriert zum Erfassen von wenigstens einem Merkmal der Ab-gleicheinheit (113) des kalibrierten Sternbildsi-mulators (110),

wobei das System zum Einmessen des Sternsensors (120) eingerichtet ist und das Einmessen das Ermitteln von wenigstens einem Merkmal der Abgleicheinheit (113) durch die Erfassungseinheit (150) nach einem Überführen der Ausrichtungsreferenz (BRF) zu der Positions- und/oder Lagereferenz (ARF) unter Verwendung der zweiten Rotation ($Q_{STR}$) und der fest kalibrierten Rotation ($Q_{OSPS}$) umfasst.

**6.** System (100) nach Anspruch 5, wobei das System derart eingerichtet ist, dass das Ermitteln des wenigsten eines Merkmals durch die Erfassungseinheit (150) ein optisches Erfassen unter Verwendung einer optischen Erfassungseinheit umfasst.

**7.** System (100) nach Anspruch 6, wobei das System derart eingerichtet ist, dass das optische Erfassen unter Verwendung von Autokollimation erfolgt.

**8.** System (100) nach wenigstens einem der vorhergehenden Ansprüche 5 bis 7, wobei die fest kalibrierte Rotation ($Q_{OSPS}$) in einer Quaternion Metrik ($Q_{OSPS}$) oder in einer Rotationsmatrix ($A_{OSPS}$) ausgeführt sind oder werden.

**9.** System (100) nach wenigstens einem der vorhergehenden Ansprüche 5 bis 8, wobei das System derart eingerichtet ist, dass das Überführen durch die folgende Formel ermittelt wird:

$$Q_{ARF}(BRF, IRF) = Inv(Q_{STR} \times Q_{OSPS})$$

wobei '$Q_{ARF}$' das Überführen, 'Inv' der Operator für die Inversion eines Quaternions, '$Q_{STR}$' das durch den Sternsensor ausgegebene Quaternion,' $\times$ ' den Operator für die Quaternion Multiplikation, und '$Q_{OSPS}$' die kalibrierte Rotation darstellt.

**10.** System (100) nach wenigstens einem der vorhergehenden Ansprüche 5 bis 9, wobei das System derart eingerichtet ist, dass das Einmessen des Sternsensors (120) auf ein Referenzsystem (SCRF) des Raumflugkörpers (130) erfolgt.

**11.** System (100) nach wenigstens einem der vorhergehenden Ansprüche 5 bis 10, wobei der Raumflugkörper (130) als ein Satellit, eine Raumkapsel oder Raumfahrzeug ausgebildet ist.

**12.** Verfahren (V) zum Einmessen und/oder Test eines auf einem Raumflugkörper (130) montierten Sternsensors (120) unter Verwendung eines kalibrierten Sternbildsimulators (110), mit den folgenden Verfahrensschritten:

- Erfassen (S1) einer zweiten Rotation ($Q_{STR}$) die sich aus einer zueinander liegenden Ausrichtungsreferenz (BRF) und einer mechanischen Position- und/oder Lagereferenz (MRF) ergibt, wobei die Ausrichtungsreferenz (BRF) eine Referenz einer Sensoroptik (121) des Sternsensors (120) und die mechanischen Position- und/oder Lagereferenz (MRF) eine Referenz des Sternsensors (120) mit Bezug auf den Raumflugkörper (130) ist;
- Überführen (S2) der Ausrichtungsreferenz (BRF) zu einer Positions- und/oder Lagereferenz (ARF) eines kalibrierten Sternbildsimulators (110) unter Verwendung der zweiten Rotation ($Q_{STR}$) und einer ersten fest kalibrierten Rotation ($Q_{OSPS}$), und
- Einmessen (S3) des Sternsensors (120) durch ein Ermitteln von wenigstens einem Merkmal einer Abgleicheinheit (113) des kalibrierten Sternbildsimulators (110) durch eine auf dem Raumflugkörper (130) montierte Erfassungseinheit (150).

**13.** Verfahren (V) nach Anspruch 12, weiter umfassend:

Auslesen einer fest kalibrierten Rotation ($Q_{OSPS}$), die sich aus einer definierten Sternformation (IRF) eines Sternkataloges und einer Positions- und/oder Lagereferenz (ARF) einer Abgleicheinheit (113) eines kalibrierten Sternbildsimulators (110) ergibt.

**14.** Recheneinheit (140) mit einer Prozessoreinheit (143), einer Kommunikationsschnittstelle (142) und einer Speichereinheit (141) zum Einmessen und/oder Test eines auf einem Raumflugkörper (130) montierten Sternsensors (120) zur Verwendung in einem kalibrierten Sternbildsimulator (110) nach wenigstens einem der Ansprüche 1 bis 4.

**15.** Computerprogramm, wobei das Computerprogramm in eine Speichereinheit (141) einer Recheneinheit (140) nach Anspruch 14 ladbar ist und Programmcodeabschnitte aufweist, um die Recheneinheit (140) zu veranlassen, das Verfahren zum Einmessen und/oder Test eines auf einem Raumflugkörper (130) montierten Sternsensors (120) nach wenigstens einem der Ansprüche 12 bis 13 auszuführen, wenn das Computerprogramm in der Recheneinheit (140) ausgeführt wird.

FIG. 1

EP 4 443 107 A1

FIG. 2

EP 4 443 107 A1

FIG. 3

S1 → S2 → S3

V

FIG. 4

140

141

143

142

Europäisches
Patentamt

European
Patent Office

Office européen
des brevets

**EUROPÄISCHER RECHERCHENBERICHT**

Nummer der Anmeldung

EP 23 21 7748

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 9 835 711 B2 (THALES SA [FR]) 5. Dezember 2017 (2017-12-05) <br> * Abbildungen 1, 2 * <br> * Spalte 1, Zeilen 44-51 * <br> * Spalte 2, Zeile 2 * <br> * Spalte 4, Zeile 63 - Spalte 5, Zeile 12 * <br> * Spalte 5, Zeilen 29-42 * <br> * Spalte 6, Zeilen 30-43 * <br> * Ansprüche 6, 9 * <br> ----- | 1-15 | INV. <br> G01C21/02 <br> B64G1/36 |
|  |  |  | **RECHERCHIERTE SACHGEBIETE (IPC)** <br><br> G01C <br> B64G |

Der vorliegende Recherchenbericht wurde für alle Patentansprüche erstellt

| Recherchenort | Abschlußdatum der Recherche | Prüfer |
|---|---|---|
| Den Haag | 7. Juni 2024 | Kuhn, Robert |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 21 7748

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-06-2024

| Im Recherchenbericht angeführtes Patentdokument | Datum der Veröffentlichung | Mitglied(er) der Patentfamilie | Datum der Veröffentlichung |
|---|---|---|---|
| US 9835711 B2 | 05-12-2017 | EP 3002554 A1 | 06-04-2016 |
| | | FR 3026837 A1 | 08-04-2016 |
| | | US 2016097834 A1 | 07-04-2016 |

Für nähere Einzelheiten zu diesem Anhang : siehe Amtsblatt des Europäischen Patentamts, Nr.12/82

EPO FORM P0461